# EUROPEAN PATENT APPLICATION

(11) **EP 4 306 196 A1**
(43) Date of publication of application: **17.01.2024**
(21) Application number: 23182947.4
(22) Date of filing: 03.07.2023
(51) Int. Cl.: B01D 46/00, B01D 46/24

(54) **AN AIR FLOW GUIDING STRUCTURE AND AN AIR FILTER CARTRIDGE**

(30) Priority: 11.07.2022 SE 2250891
(71) Applicant: Camfil Aktiebolag, 111 34 Stockholm (SE)
(72) Inventor: SEALES, Frank, Lachine, H8S 2Y1 (CA); NILSSON, Mikael, 507 33 Brämhult (SE); HEDLUND, Kenny, 619 33 Trosa (SE); FORSLUND, Mikael, 168 56 Bromma (SE)
(74) Representative: Zacco Sweden AB

(57) **Abstract**

An air flow guiding structure (100) for a pulse filter cartridge (110, 111) configured to include a hollow filter media pack (101), said air flow guiding structure extending from a first end (2) to a second end (3) and including a cage (1, 20), said air flow guiding structure being configured to be positioned inside a hollow filter media pack (101) of an pulse air filter cartridge, and said air flow guiding structure including at least one air flow guiding vane (11) arranged at least partially within an interior volume (V) of the cage (1), which vane is configured to guide of an air flow directed into the air filter cartridge through the cage (1, 20) and the filter media pack (101) during use. The disclosure further relates to an air filter cartridge.

## Description

### Technical field

The present disclosure relates to an air flow guiding structure for a filter cartridge configured to include a filter media pack and an air filter cartridge. More specifically, the disclosure relates to an air flow guiding structure for a filter cartridge configured to include a filter media pack and an air filter cartridge as defined in the introductory parts of the independent claims.

### Background art

Hollow air filters typically include hollow air filter media pack and some kind of support arrangement held together to form an air filter cartridge, which is configured to be mounted in an air filter arrangement so that air to be filtered can flow through the filter media. There is a continuous desire to improve performance and reduce costs within air filtration, and there is thus a need for improved air filters that show excellent performance and are easy to manufacture.

### Summary

The present disclosure relates according to a first aspect to an air flow guiding structure for a pulse filter cartridge configured to include a hollow filter media pack. The air flow guiding structure extends from a first end to a second end and includes a cage and it is configured to be positioned inside a hollow filter media pack (101) of an air filter cartridge. The air flow guiding structure includes at least one air flow guiding, which vane is configured to guide an air flow directed into the air filter cartridge through the cage and the filter media pack during use. The at least one vane may be configured to guide the air flow from an axial direction into a substantially radial direction, or from a substantially radial direction into an axial direction, to guide the air flow through the cage and the filter media pack.

The at least one vane may comprise a curved or flat vane body having a first edge oriented toward the first end of the air flow guiding structure and a second edge oriented toward said second end. The vane body is preferably arranged in the air flow guiding structure with its first edge closer to an outer side of the cage, and its second edge closer to a central axis of the cage, and may suitably be arranged in the air flow guiding structure so that an angle of attack for the air flow is between 5 and 85 degrees, said angle of attack being the angle between the axial direction of the cage and a straight line connecting the first edge and the second edge.

The air flow guiding structure preferably comprises a plurality of vanes arranged circumferentially in the cage, and the plurality of vanes may be arranged at different locations in the length direction of the air flow guiding structure.

The cage is suitably tapered to be narrower at the first end than at the second end.

The at least one vane may be located on the cage wall, with its second edge closer to the central axis of the cage than an inner side of the cage.

The cage may be configured to act as an air filter media supporting cage, when mounted in an air filter cartridge.

Alternatively, the at least one vane may be positioned on a vane insert arranged within the interior volume of the hollow filter media pack. The vane insert may be a grid structure configured to be positioned adjacent to an inner side of the cage.

The supporting cage may suitably have latticework walls configured to support the filter media pack when mounted in an air filter cartridge. An outer side of the cage may be configured to face the filter media pack when mounted in an air filter cartridge.

The air flow guiding structure including the at least one air flow guiding vane is preferably configured to guide the air flow of an air pulse directed into the filter cartridge from said second end during use, from the interior volume and through the cage wall and the filter media pack.

The present disclosure also relates to an air filter cartridge comprising the air flow guiding structure of the first aspect and a filter media pack.

The air filter cartridge may comprise front and rear end plates and the filter media pack may be a pleated filter medium extending in a circumferential direction of the supporting cage with the pleats extending in a length direction of the cartridge, wherein the air filter cartridge preferably is pulse filter cartridge.

Alternatively, the air filter cartridge may include a filter media pack comprising loose adsorbent material.

The present disclosure will become apparent from the detailed description and the example embodiments given below. The detailed description and specific example embodiments disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described since such device may vary. It is also to be understood that the terminology used herein is for the purpose of describing particular embodiments only and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Detailed description

The present disclosure relates to an air flow guiding structure for a pulse air filter cartridge configured to include a filter media pack.

The air flow guiding structure of the present disclosure extends from a first end to a second end and includes a supporting cage defining an interior volume and it is configured to be positioned in a pulse air filter cartridge. The cage may have a configuration that can support the air filter media pack and allow the air flow to pass, or may be part of an air flow guiding insert and be configured to support the air flow guiding vanes of the air flow guiding structure, and may in that case be used in combination with a separate filter media supporting cage. The air filter media pack in the cartridge may suitably be a hollow filter media pack and may be closed at a first end and open at a second end. The air flow guiding structure is suitable for use in any kind of hollow pulse air filter, i.e., air filters where a short, compressed air pulse is directed regularly in a direction opposite to the main filtration direction in orderto clean the filters. Thus, in a pulse filter the air flow guiding vanes are configured to guide the air flow of an air pulse directed into the filter cartridge from said second end during use, from the interior volume and through the cage wall and the filter media pack. The reverse compressed air pulse may have a linear air velocity that is approximately 100 times the linear air velocity for the forward general filtration air flow.

A pulse air filters are commonly used in industrial applications to remove particulate matter from air or gas streams. They operate based on the principle of using short bursts of compressed air to clean the filter elements. The operation of an pulse air filter generally includes a filtration stage and a cleaning stage. In the filtration stage, the polluted air or gas containing particles enters a filtration chamber of the filter system. The chamber typically contains multiple filter elements, which are typically cylindrical cartridges or bags made of porous filter media material. As the air passes through the filter elements, the particles present in the air are trapped on the surface or within the porous structure of the filter media. The filter elements gradually accumulate the captured particulate matter, which leads to increased pressure drop and energy consumption.

To maintain the filter's performance and prevent excessive pressure drop across the elements, periodic cleaning is necessary. This is where the air pulse mechanism comes into play. The cleaning stage involves releasing a pulse air flow of compressed air from one or more nozzles or blow pipes located above or within the filter elements on the clean side.

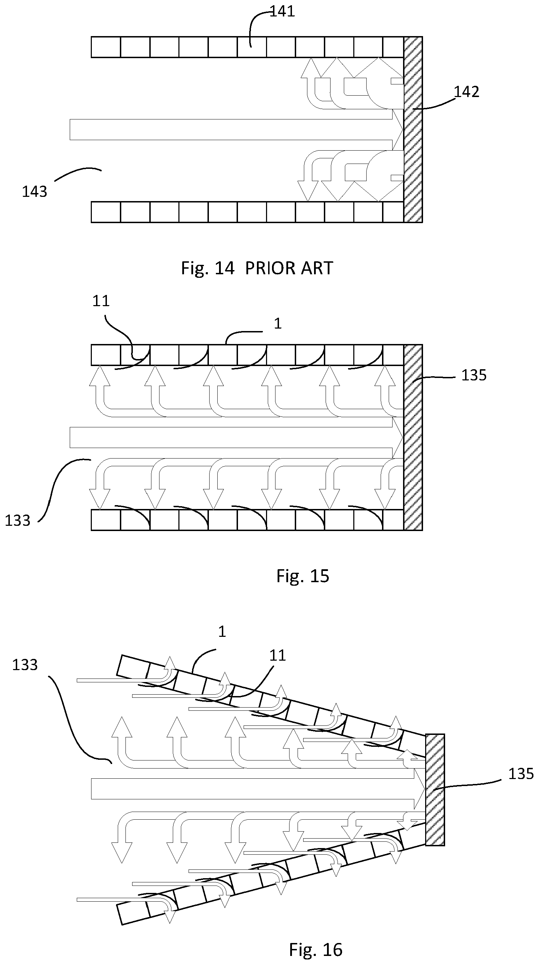

Pulse air filter cartridges typically have a construction wherein a hollow filter media pack is arranged such that a closed interior space is formed, inside the filter media pack. When a pulse air flow enters the interior of a hollow air filter cartridge from an open end of the filter cartridge, i.e. upstream of the filter media, the pulse air flow will take the easiest way. This means that the pulse airflow will first reach the closed end of the interior space before changing direction and passing the filter media in a direction transverse to the filter media surface. The air flow of the compressed air pulse has a very high velocity, typically around 300 m/s or more, and consequently has a very high kinetic energy. When the pulse air flow reaches the closed end of the pulse filter cartridge, it is stopped and the kinetic energy is transformed into static pressure. The static pressure will be very high in the vicinity of the closed end of the filter cartridge, and the pressure within the interior of the filter media pack will thus instantly be substantially higher than the pressure on the outside of the filter media pack. The pulse of compressed air thus creates a reverse airflow within the filter elements. This is schematically illustrated in Figures 14 - 16. The sudden increase in pressure and velocity causes the filter media to flex and vibrate, dislodging the accumulated particulate matter from the surface, from the surface of fibers within the media structure or within pores. The particles are then shaken off and fall into a collection hopper or bin located beneath the filter chamber. After the pulse cleaning stage, the pulse air filter can again enter a filtration stage.

In conventional pulse air filters, the pulse effect, and thus the cleaning, will be most effective near the closed end of the pulse air filter cartridge, as schematically illustrated in Figure 14. However, a part of the static pressure energy will propagate and cause an increased static pressure further backward in the cartridge, i.e. closer to the open end of the cartridge. This effect will diminish in direction toward the open end of the pulse air filter cartridge.

There is a desire to obtain a more even and thus effective pulse effect over the entire filter media pack. This is solved according to the present disclosure by the arrangement of air flow guiding vanes on the upstream side of the filter media pack with respect to the pulse air flow direction. The presence of air flow guiding vanes may contribute to improved pulse effect by partially blocking the passage through the filter media in the radial direction, thus increasing the proportion of the static pressure propagating backwards toward the open end of the cartridge, such that the high static pressure inside the filter media pack becomes more evenly distributed in the interior volume of the filter cartridge during the pulse, and the pulse cleaning will be more effective over the entire filter media pack. The vanes thus guide the pulse air flow so as to be appropriately distributed over the filter media before it is allowed to pass through the filter media and blow off particles captured thereby (Figures 15-16). At the same time, the air flow guiding vanes have a shape that does not hinder the air flow or increase pressure drop during the filtration stage.

The filter media pack can be of any suitable type and may typically be a hollow structure having a thickness in the radial direction to ensure that the filter medium will have a possibility to retain the species to be removed and thus clean the air passing through the filter media pack. For example, a filter media pack can include a pleated sheet of filter media where the pleats extend in a radial direction, or a thick felted media, or loose fibers or beds of loose adsorbent material in the form of granules, beads or pellets. In case the filter medium is a loose material, it may be enclosed in an air permeable cage container enclosing the filter material on all sides. A pleated structure may be preferred in order to decrease pressure drop. The species to be removed by the filter media pack include particles of different sizes and materials as well as gases or vapors of any kind.

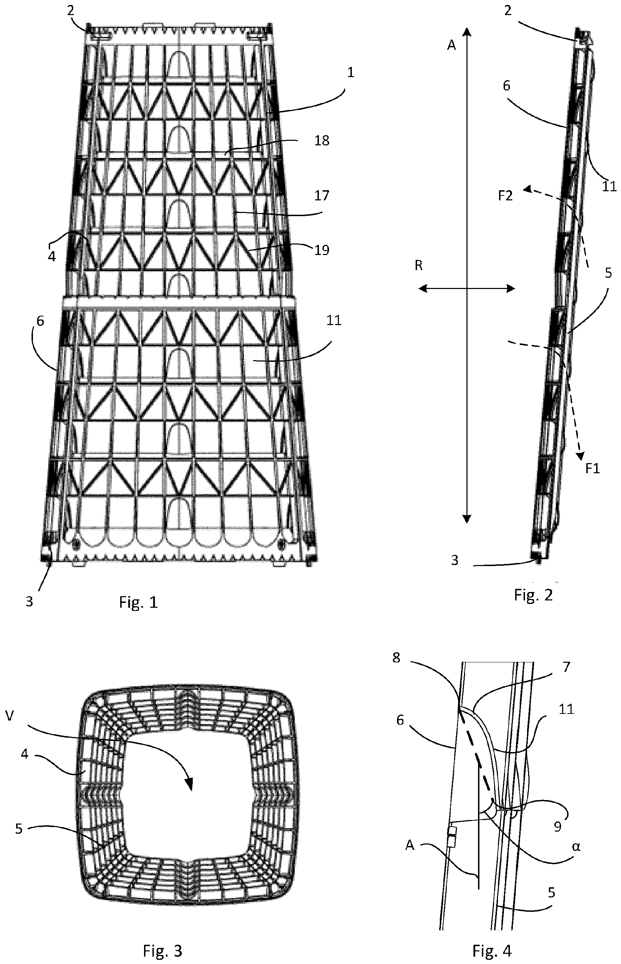

The air flow guiding structure includes at least one air flow guiding vane. Typically, a plurality of vanes is included in the air flow guiding structure, and in the below, the at least one air flow guiding vane, is referred to as "the vanes". A plurality of vanes improves the distribution of the pulse air flow during use. The vanes are preferably distributed in a desired pattern over the entire inner area of the filter media pack, to make full use of the filter capacity. It should be noted that not all vanes need to be identical or need to be positioned in exactly the same way. The vanes are configured to guide an air flow directed into the air filter cartridge through the cage and the filter media pack during use and may be configured to guide the air flow from an axial direction into a substantially radial direction, or from a substantially radial direction into an axial direction, to guide the air flow through the cage and the filter media pack. Thus, air to be filtered can be directed through the filter media in a direction toward the interior volume and further out through the open end of the cartridge, or the air flow can be directed through the open end into the interior volume and out through filter media, as schematically indicated by the arrows F1 and F2 in Fig. 2. The vanes are arranged at least partially within an interior volume of the supporting cage, which includes that it can be incorporated in the cage wall, as discussed in more detail below. However, the vanes will always be located inside the air filter media pack when mounted in an air filter cartridge.

The vane body is preferably arranged in the air flow guiding structure with its first edge closer to an outer side of the cage, and its second edge closer to a central axis of the cage, and may suitably be arranged in the air flow guiding structure so that an angle of attack for the air flow is between 5 and 85 degrees, said angle of attack being the angle between the axial direction of the cage and a straight line connecting the first edge and the second edge.

The vanes may comprise a curved or flat vane body having a first edge oriented toward the first end of the air flow guiding structure and a second edge oriented toward said second end. The vane body is preferably curved to better direct air flow through the filter cartridge during use, which further improves the air flow in both directions through the filter media, and also results in a better pulse effect. The curved vane body is positioned so that it presents a concave surface both toward an air flow entering the air filter cartridge radially through the filter media, and toward an air flow entering the air filter cartridge from an axial direction through the second open end. Thus, with respect to an air flow directed from the outside of the cage assembly toward the interior volume, the first edge will be a leading edge and the second edge will be a trailing edge, and with respect to an airflow directed from an air passage opening at the second end of the cage assembly, the second edge (located at or near the inside of the cage assembly) will be the leading edge and the first edge (located at or near the outer side of the cage assembly) will be the trailing edge.

The air flow guiding structure preferably comprises a plurality of vanes arranged circumferentially in the cage, and the plurality of vanes may be arranged at different locations in the length direction of the air flow guiding structure.

The cage of the air flow guiding structure can be in the form of a cylinder, cone or pyramid, and can have circular, oval, square or rectangular cross-sectional shape. The cage is suitably tapered so as to be narrower at the first end than at the second end, in order to facilitate installation in air filter arrangement where there is limited space or obstructions in the way. In a tapered cage, the vanes may have an additional pulse air flow guiding effect in that they may gradually "cut off" parts of the pulse air flow as it enters via the open end of the cartridge (Fig. 16), such that the kinetic energy transforms into static pressure already in the vanes.

An air filter cartridge including the air flow guiding structure may typically have approximately the same shape as the cage. The cage may suitably have latticework walls configured to support the filter media pack when mounted in an air filter cartridge. The outer side of the cage may be configured to face the filter media pack when mounted in an air filter cartridge.

Most preferably, the vanes are an integrated part of the cage wall. The cage is suitably configured to support the filter media pack in a filter cartridge, and preferably has a configuration that gives sufficient strength and stability and is simple and effective to manufacture. The cage may be an assembly comprising two or more cage wall members extending in a length direction from the first end to the second end. The cage wall members can be designed to be very easy to assemble. Each of the cage wall members have an inner side facing the interior volume when assembled, and an outer side facing the filter media pack when mounted in a filter cartridge. The wall members may suitably have a latticework structure including column elements and beam elements, where the column elements provide stability in the length direction of the cage assembly and the beam elements connect the column elements and provide strength and stability in a circumferential direction. The column elements extend substantially in the length direction of the cage, i.e., they generally extend from the first end to the second end of the wall member but need not be parallel with each other or with the length direction of the wall member. Each wall member can include two or more column elements, depending on the size of the filter media pack to be supported by the cage assembly, and may include for example 6-10 column elements. The distance between adjacent column elements may be dependent on the number of column elements and the circumferential width of the cage wall member. When the cage assembly is used in a pulse filter cartridge which is adapted to be installed on a mounting stand, such as a tripod, the column elements of the wall members will also support the axial load exerted on the filter cage assembly when it is installed. The vanes may preferably be provided in the cage wall, with their second edge closer to the central axis of the cage than an inner side of the cage. This means that the second edge may be configured to protrude beyond a plane formed by the other elements (e.g. the column elements) forming the cage. This can be obtained by the vane edge having a bent shape and being attached between adjacent column elements. Only a slightly bent shape is needed. The protruding second edge may improve guiding of the air flow through the air filter cartridge, and is particularly beneficial for pulse filters, where opposite air flow directions are applied.

The beam elements extend in a cage circumference direction, i.e., they generally extend from one side of the wall member to the other side and can be arranged in a direction perpendicular to the length direction of the wall member, or can be inclined at angle between the length direction and the direction perpendicular to the length direction.

The vanes can be arranged in rows, which extend in a cage circumference direction, and the air flow guiding structure may suitably include a plurality of vane rows in the length direction, so that the air flow is guided through the filter media pack throughout its entire surface. The vanes may be included in the cage wall members as a part of the latticework and can act as column connecting sections which extend in a cage circumference direction, and can be arranged in a direction perpendicular to the length direction of the wall member, or can be positioned along an inclined line at angle between the length direction and the direction perpendicular to the length direction. The vanes can be located between and attached to adjacent column elements and extend in the length direction. The vanes and the beam elements can thus be arranged to connect the column elements at multiple points and thereby serve to stabilize the cage assembly, while still allowing an air flow to pass. The cage assembly may advantageously comprise four cage wall members. Thereby, a substantially square or rectangular cross-section transverse to the length direction of the cage assembly can be obtained. A square cage assembly will have a larger opening and a larger total cage filter area compared to a cage assembly with a circular cross section, which leads to decreased pressure drop. Because of all the connecting elements that can act as vanes and are integrated into the inner cage, the air passing through the filter is better directed to the filter outlet, and therefore decreases the pressure drop.

Alternatively, the vanes may be positioned on a vane insert to form a vane insert cage arranged within the interior volume of the hollow filter media pack. Arranging the vanes on an insert allows the use of any suitable filter media supporting cage having sufficient stability and may particularly be advantageous in filters where the filter medium is a loose filter material, and the filter media pack is a cage container enclosing the filter material. In fact, if the filter media is fully stable and self-containing, a vane insert can be used also without a supporting cage. The vane insert can be a grid structure configured to be positioned adjacent to an inner side of the cage, and can be made as a grid sheet, which is bent to fit inside the cage of the air flow guiding structure.

The air flow guiding structure, i.e., both cage and vanes, may advantageously be made of corrosion resistant material, preferably plastic material or polymer composite material, which may be advantageous when operating the filter in corrosive environment. Plastic material or polymer composite material has the further advantage of having low weight, as compared e.g. to metal such as steel, and allows effective manufacture, since complicated shapes can be integrated into the wall member. The cage wall members, with or without the vanes, are preferably integral pieces, which may advantageously be obtained by injection molding. Injection molding is an effective and low-cost manufacturing method, resulting in a strong wall member that can be obtained in one step, and the various elements thereof need not be joined in separate steps. However, other material can be contemplated for the air flow guiding structure, in particular when the vanes are arranged on vane insert, e.g. metal.

The air flow guiding structure of the present disclosure is designed to increase performance in pulse filters, but can also advantageously be used for air filters without pulsing and will then be capable of considerably decreasing the pressure drop.

The present disclosure also relates to a pulse air filter cartridge comprising the above pulse air flow guiding structure, the air filter cartridge preferably being a pulse filter cartridge. The cartridge suitably includes end plates that serve to keep the filter media pack in position and facilitate installation in an air filter arrangement. A first end plate can be attached at a first end of the cage of the air guiding structure and can be closed or can have an opening for air flow out of or into the interior volume of the filter cartridge. A second end plate can be attached at a second end of the cage and has an opening for air flow out of or into the interior volume of the filter cartridge. The first and second end plates can include attachment portions that are configured to interlock with the first and second ends, respectively, of the cage assembly, and can further include filter media pack retaining portions extending radially from the cage assembly and receiving surfaces may be configured to receive the ends of a hollow filter media pack. The filter media pack can suitably be attached and sealed to the end plates by a suitable adhesive.

During the pulse, the compressed air flow may force the filter media in a downstream direction, which can damage the media pack unless precautionary measures are taken. The pulse air filter cartridge may therefore suitably comprise an exterior support structure arranged around the exterior periphery of the filter media pack, to keep the filter media pack in place during the cleaning stage, preventing the air pulse from blowing off and destroying the filter media pack. The exterior support structure may preferably comprise a string or wire wound or coiled around the filter media pack, or a net wrapped around the media pack, or one or more rings placed over the periphery of the filter media pack. The exterior support structure may be made from any suitable material such as metal or plastic.

If desired, two filter cartridges may be assembled to form a longer filter cartridge assembly. In this case the cages may have different sizes so that the size of the first end plate of one filter cartridge matches the size of the second end plate of the other filter cartridge. The first end plate of one filter cartridge may then have an opening for air flow out of or into its interior volume and will be placed adjacent to the second end plate of the other filter cartridge, which may have a closed first end plate. The filter cartridge assembly will thereby have a total interior reaching from the second end of one filter cartridge to the closed end of the other filter cartridge. If desired more than two support structures can be included in the cartridge assembly in a similar manner.

The filter cartridge can be included in an air filter arrangement by attaching it over an air flow passage opening in a base plate or tube sheet and attaching a closed front end plate of the cartridge to a mounting stand which is, or can be, attached to the base plate or tube sheet.

The present disclosure will become apparent from the detailed description and the example embodiments given below. The detailed description and specific example embodiments disclose preferred embodiments of the disclosure by way of illustration only. Those skilled in the art understand from guidance in the detailed description that changes, and modifications may be made within the scope of the disclosure.

### Brief descriptions of the drawings

The above objects, as well as additional objects, features and advantages of the present disclosure, will be more fully appreciated by reference to the following illustrative and nonlimiting description of example embodiments of the present disclosure, when taken in conjunction with the accompanying drawings.
Figure 1 shows a cage wall member of a cage included in the air flow guiding structure of the present disclosure;
Figure 2 is a side view of the cage wall member of Fig. 1;
Figure 3 shows a cage of an air flow guiding structure of the present disclosure seen from the second end thereof;
Figure 4 shows a detail of a wall member with a vane;
Figure 5a shows one example of a vane insert before bending;
Figure 5b shows another example of a vane insert design with bending areas between rigid vane sections before bending;
Figure 5c shows a top view of the vane insert in Fig. 5b;
Figure 6 shows the vane insert of Figs. 5a, 5b when it has been bent for insertion in a cage;
Figure 7 shows a perspective view of a filter cartridge including a vane insert and a filter media pack;
Figure 8 shows a top view of the filter cartridge in Fig. 7;
Figure 9 shows a cross-sectional view of the filter cartridge in Fig. 7 along the line C-C in Fig. 8;
Figure 10 shows a perspective view of an air filter arrangement including two filter cartridges on top of each other;
Figure 11 shows a cross-sectional view of the air filter arrangement in Fig. 10;
Figure 12 shows a cage wall member with an alternative configuration;
Figure 13 shows the air filter arrangement of Fig. 10, with an exterior support structure arranged on the outside;
Figure 14 schematically illustrates the pulse air flow in a conventional pulse air filter cartridge;
Figures 15 and 16 schematically illustrate the pulse air flow in pulse air filter cartridges according to the present disclosure.

### Example embodiments

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

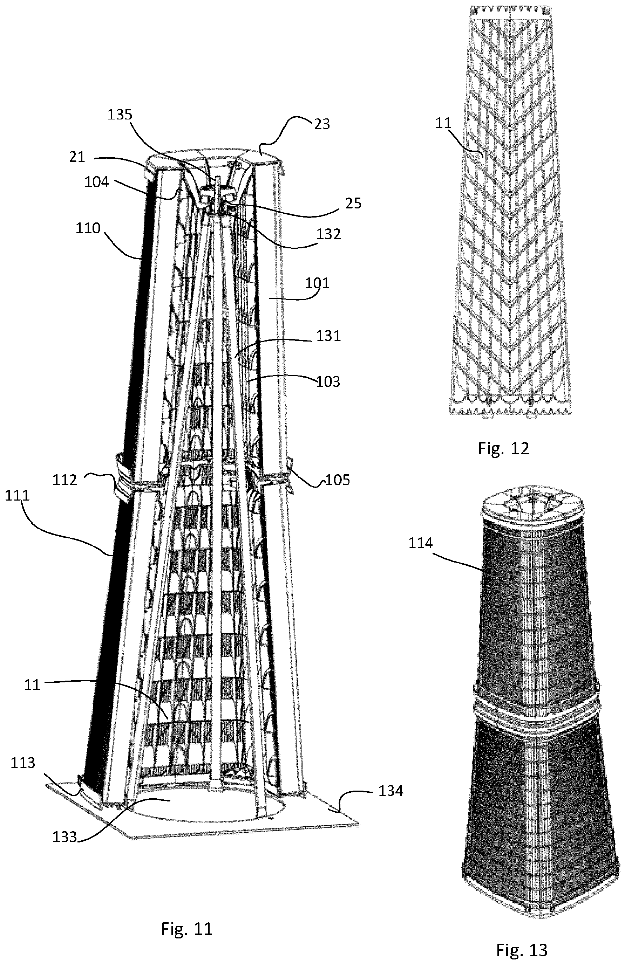

Figure 1 shows a cage wall member of a cage included in the air flow guiding structure air flow guiding structure. Figure 12 shows a cage wall member with an alternative configuration. The air flow guiding structure extends from a first end 2 to a second end 3 and includes a supporting cage 1 and at least one air flow guiding vane 11. A plurality of vanes are arranged at different locations in the length direction of the air flow guiding structure, and the supporting cage 1 has latticework walls 4 configured to support the filter media pack 101 when mounted in an air filter cartridge 110. In this example, the outer side 6 of the cage is configured to face the filter media pack 101 when mounted in an air filter cartridge.

In the examples, the vanes are arranged at least partially within the interior volume V of the cage 1, and vanes are configured to guide an air flow directed into the air filter cartridge through the cage (1) and the filter media pack (101) during use. Column elements 17, beams 18 and cross bracing elements 19 may be included in the supporting cage to provide strength and stability in the length direction and in the circumference direction. Figure 3 shows the cage seen from the second end thereof. The cage includes four wall elements, which are substantially flat and have equal width, and thus form an essentially square cross-sectional shape. The cage in Fig. 1 is tapered so as to be narrower at the first end 2 than at the second end 3.

Figure 2 is a side view of the cage wall member of Fig. 1. The arrows F1 and F2 show how the air flow is guided through the air flow guiding structure. The vanes 11 are configured to guide the air flow from an axial direction A into a substantially radial direction R (F2), or from a substantially radial direction R into an axial direction A (F1), to guide the air flow through the cage 1 and the filter media pack 101. In a pulse filter, the forward general filtration air flow direction (F1) will typically enter the structure 1 radially and leave it axially, and the reverse pulse flow direction (F2) will enter the structure 1 axially and leave it radially. For other filter types, the air flow guiding structure can be directed as desired. Figure 4 shows a detail of a wall member with a vane 11 located at least partially within the cage wall. The vane 11 may have a second edge 9 positioned closer to the central axis A of the cage than an inner side 5 of the cage.

In the examples of Figs 1-4, 11 and 12, the vanes are included in the cage wall members as a part of the latticework and can act as column connecting sections. As shown, the vanes can be arranged in rows, which extend in a cage circumference direction, and the air flow guiding structure includes a plurality vane rows in the length direction. The rows can be arranged in a direction perpendicular to the length direction of the wall member, as shown in e.g. Fig. 1 and 11, or can be positioned along an inclined line at angle between the length direction and the direction perpendicular to the length direction, as shown in Fig. 12.

As shown in Fig. 4, the vanes comprise a curved or flat vane body 7 having a first edge 8 oriented toward the first end 2 of the air flow guiding structure and a second edge 9 oriented toward said second end 3. The vane body 7 is arranged in the air flow guiding structure with its first edge 8 closer to an outer side 6 of the cage, and its second edge 9 closer to a central axis of the cage. Fig. 4 also shows how the vane body is arranged in the air flow guiding structure so that an angle of attack α for the air flow is between 5 and 85 degrees. The angle of attack is the angle between the axial direction A of the cage and a straight line connecting the first edge 8 and the second edge 9.

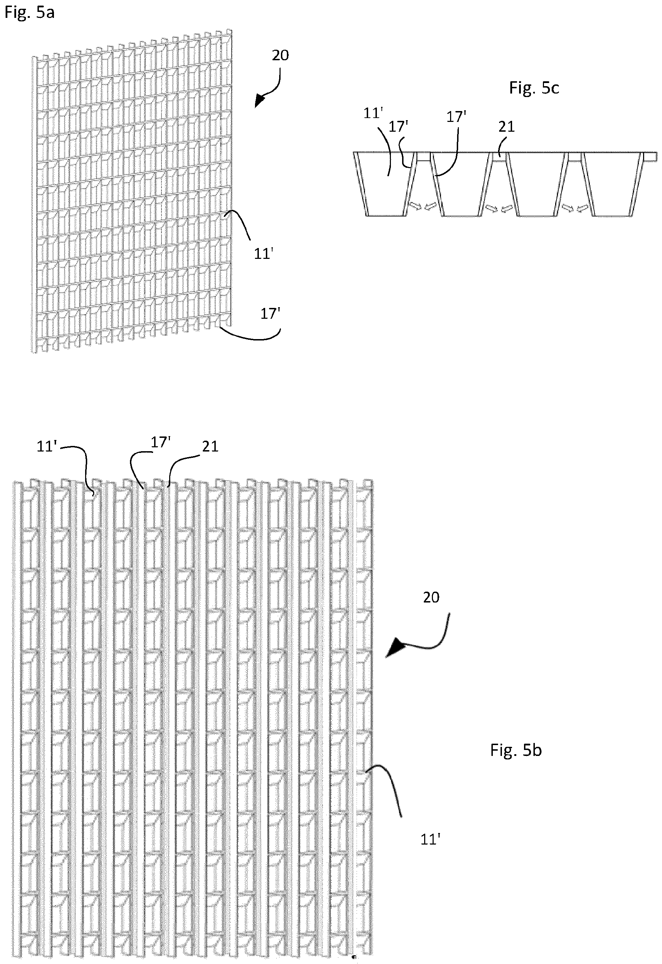

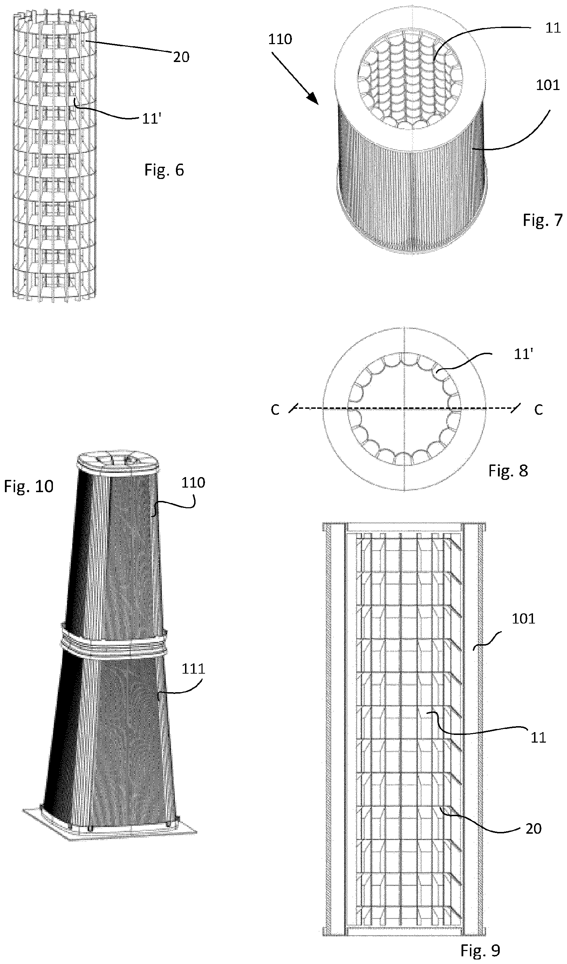

Figure 5a shows a vane insert before bending. The vane insert includes a plurality of column element 17', and a plurality of vanes arranged above each other between adjacent column elements 17'. Figure 5b shows an alternative design for a vane insert, including bending sections 21 between rigid column sections 17 '. A plurality of vanes are arranged above each other between adjacent column elements 17' before bending. Fig. 5c shows a top view of the vane insert in Fig. 5b. The small arrows illustrate how the vane section move upon bending. Figure 6 shows the vane insert of Fig. 5a, 5b, which both will look approximately the same when they have been bent for insertion into a cage. Alternatively, a vane insert can be made by assembly of two or more pieces, and can have a circular, oval, rectangular of square cross-section, Figure 7 shows a filter cartridge including the vane insert and a filter media pack;

Figure 8 shows a top view of the filter cartridge in Fig. 7 and Figure 9 shows a cross-sectional view of the filter cartridge in Fig. 7 along the line C-C in Fig. 8;

The vanes 11 can be positioned on the vane insert 20 arranged within the interior volume of the hollow filter media pack, and the vane insert is a grid structure configured to be positioned adjacent to an inner side 5 of the cage.

A second aspect of this disclosure shows an air filter cartridge comprising the air flow guiding structure of the first aspect, the air filter cartridge preferably being a pulse filter cartridge.

Figure 10 shows a perspective view of an air filter arrangement including two filter cartridges 110 and 111 on top of each other. The air filter cartridge comprises the above air flow guiding structure and is preferably a pulse filter cartridge. Figure 11 shows a cross-sectional view of the air filter arrangement in Fig. 10 and illustrates an example of how the filter cartridge 110 can be mounted in an air filter arrangement. The supporting cage including the vanes 11 is arranged inside the hollow filter media pack 101, and a front end panel 23 closes the hollow air filter media at the front end 104 thereof. A mounting stand 131 in the form of a tripod is attached oven an air passage opening 133 in a base plate 134. The two cartridges 110,111 are placed over the tripod with the rear cartridge 111 closest to the opening 133, and its rear end plate 113 in abutment with the surface of the base plate 134. The front cartridge 110 is positioned so that its rear end plate 105 is in contact with the front end plate 112 of the rear cartridge 111. A connection rod 135 at the front end 132 of the tripod inserted through the front end plate of the front cartridge and fastened by mean of for example a nut. Other ways of mounting the air flow guiding structure can be contemplated.

Figure 13 shows the air filter arrangement of Fig. 10, with an exterior support structure (114) arranged on the outside, in the form of string coiled around the external surface of the media pack.

Figure 14 schematically illustrates the pulse air flow in a conventional pulse air filter cartridge. In operation, during the pulse cleaning stage, the pulse of compressed enters the interior of a cage 141 at the open end 143 and a hollow filter media pack (not shown) and goes directly to the closed end 142 of the filter cartridge. The kinetic energy of the pulse is transformed into static pressure causing the air pulse to pass through the cage and filter media with the highest force close to the closed end 142;

Figures 15 and 16 schematically illustrate the pulse air flow in pulse air filter cartridges according to the present disclosure. Also here, the pulse of compressed enters the interior of the cage 1 at the open end 133 and the hollow filter media pack (not shown) and goes directly to the closed end 135 of the filter cartridge. In these cartridges, pulse air flow guiding vanes 11 are provided, which guide and distribute the pulse air flow more evenly over the filter media pack. With a tapered cage, as shown in Fig. 16, a part of the pulse air flow may also be cut off by the vanes 11, before it reaches the closed end 135.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. An air flow guiding structure for a pulse air filter cartridge (110) configured to include a hollow filter media pack (101), said air flow guiding structure extending from a first end (2) to a second end (3) and being configured to be positioned inside a hollow filter media pack (101) of a pulse air filter cartridge, and said air flow guiding structure including a cage (1, 20) and at least one air flow guiding vane (11) arranged at least partially within an interior volume (V) of said cage (1), which vane is configured to guide the air flow of an air pulse directed into the air filter cartridge from said second end (3), from an interior volume thereof and through the cage (1, 20) and the filter media pack (101) during use.

2. The air flow guiding structure of claim 1, wherein the at least one vane (11) is configured to guide the pulse air flow from an axial direction (A) into a substantially radial direction (R) to guide the pulse air flow through the cage (1) and the filter media pack (101).

3. The air flow guiding structure of claim 1 or 2, wherein the at least one vane is arranged upstream of the filter media pack with respect to the pulse air flow direction during use.

4. The air flow guiding structure of any one of claims 1-3, wherein the at least one vane comprises a curved or flat vane body (7) having a first edge (8) oriented toward the first end (2) of the air flow guiding structure and a second edge (9) oriented toward said second end (3).

5. The air flow guiding structure of claim 4, wherein the vane body (7) is arranged in the air flow guiding structure with its first edge (8) closer to an outer side (6) of the cage, and its second edge (9) closer to a central axis of the cage (1, 20).

6. The air flow guiding structure of claim 4 or 5, wherein the vane body is arranged in the air flow guiding structure so that an angle of attack (α) for the air flow of the air pulse is between 5 and 85 degrees, said angle of attack being the angle between the axial direction (A) of the cage and a straight line connecting the first edge (8) and the second edge (9).

7. The air flow guiding structure of any one of claims 1-6, comprising a plurality of vanes (11) arranged circumferentially in the cage.

8. The air flow guiding structure of any one of claims 1-7, comprising a plurality of vanes arranged at different locations in the length direction of the air flow guiding structure.

9. The air flow guiding structure of any one of claims 1-8, wherein the cage is tapered so as to be narrower at the first end (2) than at the second end (3).

10. The air flow guiding structure of any one of claims 1-9, wherein the at least one vane (11) is located in the cage wall (4), with its second edge closer to the central axis of the cage than an inner side (5) of the cage.

11. The air flow guiding structure of any one of claims 1-10, wherein the cage is configured to act as an air filter media supporting cage, when mounted in an air filter cartridge, and has latticework walls (4) configured to support the filter media pack (101) when mounted in an air filter cartridge, and wherein an outer side (6) of the cage is configured to face the filter media pack (101) when mounted in an air filter cartridge.

12. The air flow guiding structure of any one of claims 1-10, wherein the cage is configured to act as a vane insert cage (20) on which the at least one vane (11') is positioned and is configured to be arranged within an interior volume of a separate filter media supporting cage, said vane insert cage preferably being a grid structure configured to be positioned adjacent an inner side (5) of the filter media supporting cage.

13. The air flow guiding structure of any one of claims 1-12, wherein the at least one vane (11) is configured to guide the air flow during filtration from a substantially radial direction (R) into an axial direction (A), to guide the air flow through the filter media pack (101) and through the cage (1) into the interior volume thereof.

14. A pulse air filter cartridge (110, 111) comprising the air flow guiding structure of claims 1-13, and a filter media pack.

15. The pulse air filter cartridge of claim 14, further comprising an exterior support structure (114), preferably comprising a string, wire, ring or net arranged around the exterior periphery of the filter media pack.

16. The pulse air filter cartridge of claim 14 or 15, further comprising front and rear end plates and, wherein the filter media pack is a pleated filter medium extending in a circumferential direction of the supporting cage with the pleats extending in a length direction of the cartridge, or the filter media pack comprises loose adsorbent material.
